(19) Europäisches Patentamt
European Patent Office
Office européen des brevets

(11) Numéro de publication: **0 037 300**
**B1**

(12) **FASCICULE DE BREVET EUROPEEN**

(45) Date de publication du fascicule du brevet: **25.05.83**

(51) Int. Cl.³: **A 23 L 1/34,** A 23 J 3/00 // A23L1/04

(21) Numéro de dépôt: **81400383.6**

(22) Date de dépôt: **13.03.81**

(54) **Compositions foisonnantes et préparations pour entremets et leur procédé d'obtention.**

(30) Priorité: **21.03.80 FR 8006305**

(43) Date de publication de la demande:
**07.10.81 Bulletin 81/40**

(45) Mention de la délivrance du brevet:
**25.05.83 Bulletin 83/21**

(84) Etats contractants désignés:
**AT BE CH DE FR GB IT LI LU NL SE**

(56) Documents cités:
**EP-A-0 007 054**
**FR-A-2 119 365**
**FR-A-2 399 214**
**FR-A-2 452 881**
**US-A-4 089 987**
**ANN. NUTR. ALIM. vol. 32, no. 2—3, 1978 (FR) B. MIRABEL: »Nouveau procédé d'extraction des protéines du lactosérum« pages 243—253**

(73) Titulaire: **RHONE-POULENC SPECIALITES CHIMIQUES, "Les Miroirs" 18, Avenue d'Alsace, F-92400 Courbevoie (FR)**

(72) Inventeur: **Campagne, Jean Claude, La Bernardière Saint-Vincent La Châtre, F-79500 Melle (FR)**
Inventeur: **Frappier, Guy, La roche, F-79500 Melle (FR)**

(74) Mandataire: **Dutruc-Rosset, Marie-Claude et al, RHONE POULENC RECHERCHES Service Brevets Chimie et Polymères 25, Quai Paul Doumer, F-92408 Courbevoie Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**EP 0 037 300 B1**

# Compositions foisonnantes et préparations pour entremets et leur procédé d'obtention

La présente invention est relative à des compositions foisonnantes et des préparations pour entremets ainsi que le procédé de préparation d'entremets à partir d'elles. Plus particulièrement, elle concerne des compositions foisonnantes et des préparations en poudre pou desserts à préparation instantanée notamment à base de lait.

Dans la demande de brevet européen 0 007 054 on décrit une composition foisonnante susceptible de remplacer le blanc d'oeuf dans la préparation de meringues, confiserie et certaines pâtisseries qui renferme un produit contenant au moins 20% de protéines de petit-lait solubles et de protéines de petit-lait modifiées enzymatiquement, associé à un ou plusieurs des composés ou compositions suivants : gélatine, gélatine et polyphosphates solubles dans l'eau ou gomme.

On connait aussi par le brevet français 2 119 365 une composition contenant de la gomme Xanthane combinée à la gomme de tara ou l'amidon qui permet la préparation de desserts aromatisés par des acides mais ces desserts sont de type gélifié.

On désire également préparer un produit alimentaire, sous forme d'une mousse, dans lequel coexiste du lait et des jus acides, plus spécialement des jus de fruits. Un tel produit présenterait des propriétés diététiques intéressantes. Il y a toutefois des difficultés inhérentes qui surgissent lorsque l'on veut combiner du lait qui a tendance à cailler avec un agent acidulant. Une autre difficulté réside dans le fait que, pour avoir de bonnes qualités organoleptiques et être acceptées par le consommateur, les mousses doivent satisfaire à des conditions de densité, généralement de 0,3 à 0,45. Une mousse trop légère donne une »impression de vide« et une mousse trop dense est jugée »trop lourde« ou trop liquide. Enfin, les mousses obtenues doivent être pourvues de qualités de durabilité.

Bien que certaines préparations instantanées pour la confection de mousses ou de desserts prêts à glacer ou non, existent déjà dans le commerce, ces dernières ne donnent pas entièrement satisfaction.

Les préparations dénommées mixes se présentent sous forme de poudre qu'il suffit de málanger avec du lait froid, le foisonnement étant obtenu par battage au fouet mécanique.

Généralement, la formule de ces mixes est la suivante : du sucre, le saccharose; une matière grasse le plus souvent végétale et qui peut être l'huile de soja, l'huile de maïs, l'huile de noix de coco, l'huile de graines de coton, l'huile d'arachide, l'huile de tournesol etc ... ; un ou plusieurs émulsifiants alimentaires tels que, par exemple, les mono- et diglycérides d'acides gras ou leurs esters, le stéaroyl-2 lacryllactate de sodium, les oléates et les stéarates de polyoxyéthylène-sorbitane ... ; des épaississants qui sont les plus souvent des alginates ou des carraghénates; des parfums, arômes, colorants divers.

L'emploi d'émulsifiant et de matière grasse dans une préparation en poudre nécessite la transformation de ces produits sous forme pulvérulente : la technique la plus classique consistant à sécher par atomisation une émulsion aqueuse, homogénéïsée d'un mélange émulsifiant — matière grasse — caséinate de sodium ou lait. De telles préparations de base que l'on appelera par la suite bases foisonantes, sont disponibles sur le marché ce qui permet au fabricant de mixes de ne faire qu'un mélange de poudres pour obtenir une préparation prête à l'emploi.

Mais la mise en oeuvre d'une base foisonnante composée de l'émulsifiant, de la matière grasse sur un support protéine de lait (caséinate de sodium ou lait) présente un certain nombre d'inconvénients. On a constaté une baisse du pouvoir foisonnant de la base en fonction du temps. D'autre part, la base a un mauvais pouvoir foisonnant en pH acide, que ce soit lors de la confection d'une mousse à base de lait ou d'eau. Ceci est un inconvénient important car on ne peut faire de préparations comportant des parfums ou arômes acides (fruits rouges ou citron par exemple); certains de ces arômes étant, comme mentionné précédemment, peu compatibles avec le lait.

Un des buts de la présente invention est de fournir une composition foisonnante ne contenant pas d'émulsifiant, ni de matière grasse.

Un autre but de l'invention est de fournir une composition foisonnante que l'on peut combiner avec de l'eau ou du lait même à pH acide.

Un autre but de l'invention est de fournir un entremets sous forme d'une mousse très agréable au palais ayant de bonnes propriétés organoleptiques et nutritif par lui-même.

Encore un autre but est de fournir un entremets ayant une stabilité élevée se traduisant notamment par une résistance à la synérèse par vieillissement.

La présente invention a pour objet une nouvelle composition alimentaire foisonnante caractérisée en ce qu'elle comprend au moins:

— des protéines de lactosérum extraites selon un procédé basé sur la mise en oeuvre des Sphérosil échangeurs d'ions, et
— un colloïde hydrophile de Xanthomonas.

Par protéines du lactosérum, on entend les lactalbumines, la sérumalbumine, les lactoglobulines et les immunoglobulines.

Les protéines de lactosérum intervenant dans la composition de l'invention sont obtenues selon les

procédés d'extraction basés sur la mise en oeuvre d'absorbants sélectifs connus sous le nom de marque Sphérosil échangeurs d'ions. Ces procédés sont décrits dans le brevet français 2 321 932 (75/26 530) et son certificat d'addition 2 359 633 (76/22 985) mais l'on utilisera plus particulièrement les protéines de lactosérum obtenues selon le procédé décrit dans la demande de certificat d'addition 2 392 214 (77/24 162).

Ledit procédé d'extraction des protéines de lactosérum est caractérisé en ce que le lactosérum est mis en contact avec successivement au moins une résine échangeuse d'anions puis de la silice ou avec successivement de la silice puis au moins une résine échangeuse d'anions, fixation de protéines et élution.

Les résines échangeuses d'anions sont formées de supports: alumines ou silices, revêtus d'une quantité inférieure à 20 mg/m$^2$ d'un film de polymère réticulé contenant ou portant des groupements fonctionnels amines tertiaires ou sels d'ammonium quaternaire de formules générales:

$$-CH_2-\underset{\displaystyle R}{\underset{|}{N}}-CH_2- \quad \text{ou} \quad -CH_2-N^{\oplus}-(R)_3 \quad X^{\ominus}$$

dans lesquelles R identique ou diférent représente un radical alkyle ou hydroxyalkyle ayant 1 à 4 atomes de carbone et X un anion minéral ou organique comme par exemple chlorure, sulfate, nitrate, phosphate, citrate.

La silice et les supports des résines échangeuses d'anions ont une granulométrie comprise entre 4 µm et 5 mm, une surface spécifique de l'ordre de 5 à 150 m$^2$/g, un volume poreux de 0,4 à 2 cm$^3$/g et un diamètre de pores compris entre 250 et 2500 Å.

Les polymères réticulés qui revêtent la surface des supports sont des produits en eux-mêmes connus, obtenus à partir de monomères, tels que les composés époxydiques, qui réticulent avec les polyamines comme catalyseurs; le formaldéhyde qui réticule par polycondensation avec l'urée, la mélamine, les polyamines ou les phénols; les monomères vinyliques: vinylpyridine, styrène et dérivés, qui réticulent avec des monomères polyfonctionnels comme des diacrylates ou diméthacrylates de mono- ou poly-alkylène glycols, le divinylbenzène, le vinyltrialcoxysilane, le vinyltrihalogénosilane, le bis-méthylène acrylamide, en présence d'un initiateur ou de rayons ultraviolets.

La mise en contact du lactosérum avec la ou les résines échangeuses d'anions et la silice est effectuée à un pH supérieur à 4 et de préférence compris entre 5,5 et 7,5 à des températures comprises entre 0 et 50° C et de préférence entre 0 et 30° C.

La quantité de résine(s) échangeuse(s) d'anions est de l'ordre de 5 à 15 grammes par gramme de la totalité des protéines à extraire et la quantité de silice de l'ordre de 2 à 7 grammes par gramme de la totalité des protéines à extraire.

Les protéines retenues par la ou les résines échangeuses d'anions sont les $\beta$-lactoglobulines, $\alpha$-lactalbumines, sérumalbumine et une faible partie des immunoglobulines. La silice fixe la plus grande partie des immunoglobulines.

La séparation des protéines de la ou des résines et de la silice est obtenue par élution avec soit une solution de force ionique élevée, soit une solution de pH acide pour les résines échangeuses d'anions, basique pour la silice.

Les protéines, ainsi obtenues à l'état très purifié, présentent la particularité de ne pas être dénaturées lors de leur extraction.

Elles présentent une pureté protéique élevée, en général d'au moins 90%. Pour déterminer la pureté protéique, on effectue le dosage de l'azote selon la méthode de KJELDAHL puis on calcule la pureté protéique, en multipliant le taux d'azote exprimé en pourcentage du poids de produit sec par un facteur 6,32.

Elles ne contiennent que des traces ($<$0,5%) de matières grasses et de lactose, sucre difficilement assimilable.

Elles ont une grande valeur nutritionnelle.

Le colloïde hydrophile de Xanthomonas utilisé dans l'invention est un polysaccharide obtenu par fermentation d'un hydrate de carbone sous l'action de bactéries du genre Xanthomonas. Ledit colloïde est une substance exocellulaire de haut poids moléculaire, de préférence supérieur à un million.

Les espèces représentatives de bactéries dont on peut se servir pour la fabrication de ces colloïdes sont : le Xanthomonas Begoniae, le Xanthomonas Campestris, le Xanthomonas Carotea, le Xanthomonas Hederae, le Xanthomonas Incanae, le Xanthomonas Malvacearum, le Xanthomonas Phaseoli, le Xanthomonas Vitians.

Le colloïde préféré en vue de la mise en oeuvre de la présente invention est celui produit par la bactérie de l'espèce Xanthomonas Campestris.

On peut faire fermenter toute une variété d'hydrates de carbone avec les micro-organismes appartenant aux genres précités pour fabriquer le colloïde de Xanthomonas utilisé dans les compositions selon l'invention. Les hydrates de carbone qui peuvent convenir comprennent le glucose, le saccharose, le fructose, le maltose, le lactose, les hydrolysats d'amidon, l'amidon de maïs, l'amidon de pomme de terre. La fermentation de l'hydrate de carbone se fait en général dans un milieu

aqueux renfermant jusqu'à 60 g/l de glucide. On sait que le milieu de fermentation peut comprendre, en outre, une source de phosphore, une source de magnésium qui est un activateur d'enzymes et une source d'azote qui est habituellement constituée par des »solubles de distilleries« (cf. brevet américain n° 3 000 790), du son, des farines de grains entiers tels que le sorgho, le soja ou le maïs (cf. brevet américain n° 3 271 267), du »corn steep« (cf. brevet américain n° 3 355 447), ou encore des composés azotés minéraux tels que le nitrate d'ammonium (cf. brevet américain n° 3 391 060) ou le phosphate d'ammonium (cf. demande de brevet français n° 76/05 933).

Il peut être avantageux de soumettre le moût fermenté à un chauffage dans un domaine de température de 80 à 130° C pendant environ 10 minutes à environ 1 heure.

Le colloïde de Xanthomonas est isolé du moût de fermentation et est généralement utilisé sous forme de poudre.

La séparation du colloïde de Xanthomonas du moût, éventuellement chauffé au préalable comme indiqué ci-avant, peut se faire grâce aux méthodes habituelles, par exemple en le précipitant par addition à ce moût d'un alcool inférieur comme le méthanol, l'éthanol, l'isopropanol, le butanol tertiaire ou d'acétone ou d'un mélange de ces agents de précipitation. Un fois précipité, le colloïde de Xanthomonas est séparé, lavé avec le liquide de précipitation, puis il est séché et broyé.

On peut éventuellement soumettre le colloïde de Xanthomonas obtenu à des opérations de purification supplémentaires : on peut faire appel dans cette optique aux méthodes connues de l'art antérieur consistant, par exemple, à soumettre le moût fermenté, ou bien le gel aqueux reconstitué à partir du colloïde de Xanthomonas, extrait du moût, à des opérations de centrifugation ou de filtration sur terres à diatomées, à l'action des enzymes du type protéase (cf. brevet français n° 2 264 077) ou de la soude (cf. brevet américain n° 3 729 460).

D'une manière préférentielle, on emploie le colloïde obtenu par fermentation d'un hydrate de carbone par une culture pure de Xanthomonas Campestris, ledit colloïde étant extrait à l'isopropanol, séché puis broyé. Ce colloïde sera dénommé de manière simplifiée »Gomme Xanthane«.

Il a des propriétés assez remarquables, notamment une viscosité pratiquement constante dans une large gamme de pH. Il est soluble à froid. Il montre également une bonne compatibilité avec un grand nombre de produits, dans une large gamme de concentrations.

On peut faire varier les quantités de protéines de lactosérum et de colloïde hydrophile de Xanthomonas intervenant dans les compositions foisonnantes selon l'invention en fonction des propriétés particulières de la mousse que l'on désire obtenir. En général, toutefois on a constaté qu'une composition adéquate en vue de la préparation d'entremets comprend des protéines de lactosérum et un colloïde de Xanthomonas selon un rapport en poids variant de 5 à 15%, de préference situé entre 7 et 12%.

Les compositions foisonnantes selon l'invention interviennent dans des préparations destinées à la confection de desserts mais l'on ne sortira pas du cadre de la présente invention à les mettre en oeuvre dans des entremets salés.

Les préparations pour entremets peuvent se présenter sous différentes formes. Il peut s'agir d'une poudre pour entremets à préparation instantanée c'est-à-dire obtenus par simple addition d'un liquide, lait ou eau sans nécessité de chauffage, ou de préparations liquides en boîtes que l'on peut faire foisonner sans ajout avant consommation ou des préparations foisonnées glacées prêtes à la consommation. Dans ce cas, les ingrédients des préparations ne sont plus nécessairement sous forme pulvérulente.

Les autres ingrédients de ces préparations associés aux compositions foisonnantes selon l'invention sont des produits classiques utilisés dans ce genre de préparations tels que d'autres colloïdes, des amidons non modifiés chimiquement, des phosphates alimentaires, éventuellement des agents édulcorants, acidulants, aromatisants etc.

Comme exemples de colloïdes susceptibles d'être associés au colloïde hydrophile de Xanthomonas, on peut citer les gommes de graines végétales comme les gommes de graines de caroube, gomme guar; les gommes d'algues comme les alginates, l'agar-agar, les carraghénates; la carboxyméthylcellulose sodique; la pectine; lesdits colloïdes pouvant être mis en oeuvre seuls ou en mélange.

On utilise préférentiellement les colloïdes tels que les carraghénates du type kappa, lambda, iota et/ou les alginates notamment de sodium. Ces colloides d'origine végétale, sont largement décrits dans la littérature (KIRK—OTHMER—Encyclopedia of Chemical Technology—17 pages 768 à 781—1968) et disponibles dans le commerce.

Les amidons non modifiés chimiquement peuvent être des amidons bruts ou des amidons modifiés physiquement (par exemple prégélatinisés). Dans les préparations en poudre permettant l'obtention de l'entremets sans nécessité de chauffage, on emploie préférentiellement un amidon prégélatinisé qui a la propriété de gonfler à froid. Comme exemples d'amidons alimentaires non modifiés chimiquement que l'on peut employer selon la présente invention, citons l'amidon de maïs, l'amidon de pomme de terre, l'amidon de tapioca, l'amidon de riz, l'amidon de blé. On utilise, le plus couramment, l'amidon de maïs.

Les phosphates alimentaires sont utilisés comme stabilisants de produits alimentaires qui contiennent une forte quantité de protéines. On peut nommer les orthophosphates tels que le mono-ou di-phosphate de sodium ou de potassium; les pyrophosphates tels que le pyrophosphate tétrasodique ou tétrapotassique: ces derniers étant les plus couramment employés.

Les agents édulcorants que l'on peut introduire dans les préparations pour entremets comprennent le saccharose, le dextrose (glucose), le fructose, les dextrines et les glucides analogues. On peut également préparer des entremets à faible valeur calorique en utilisant le sorbitol, le mannitol ou le xylitol ou des agents édulcorants synthétiques comme la saccharine, un sel de métal alcalin ou alcalino-terreux de la saccharine ou un peptide tel que l'ester méthylique de L-aspartyl-L-phénylalanine.

Des agents acidulants peuvent être aussi mis en oeuvre comptetenu du fait que les compositions foisonnantes de l'invention sont stables à pH acide. L'agent acidulant peut être un acide de qualité alimentaire tel que par exemple les acides citrique, tartrique, fumarique soit à l'état anhydre, soit à l'état hydraté ou un mélange desdits acides. On peut également utiliser l'acide acétique ou lactique si la préparation est sous une forme autre que pulvérulente.

Outre les composants précités, on peut aussi incorporer dans les préparations de l'invention, les ingrédients classiques pour colorer et aromatiser les entremets notamment ceux à base de lait. Ainsi on peut faire appel aux agents aromatisants habituels tels que cacao, vanille, cannelle et analogues ou à des extraits de fruits: framboise, cerise, fraise, pêche, citron, orange, pamplemousse, etc.

On définit, ci-après, à titre illustratif les compositions typiques des préparations pour entremets généralement en poudre auxquelles on ajoute soit du lait, soit de l'eau (les pourcentages sont exprimés en poids):

| | |
|---|---|
| — Protéines de lactosérum | 5 à 20% |
| — Colloïde hydrophile de Xanthomonas | 0,5 à 1,5% |
| — Amidon non modifié chimiquement | 5 à 20% |
| — Phosphate alimentaire | 0,5 à 1,5% |
| — Agent édulcorant | 50 à 90% |

Les proportions choisies préférentiellement sont les suivantes:

| | |
|---|---|
| Protéines de lactosérum | 8 à 15% |
| — Colloïde hydrophile de Xanthomonas | 0,8 à 1,2% |
| — Amidon non modifié chimiquement | 8 à 15% |
| — Phosphate alimentaire | 0,5 à 1% |
| — Agent édulcorant | 60 à 80% |

Dans le cas où l'on met en oeuvre un mélange de colloïdes c'est-à-dire que l'on associe au colloïde hydrophile de Xanthomonas un colloïde végétal comme les carraghénates et/ou les alginates de sodium, on en incorpore de 0,5 à 1,5%.

Les agents aromatisants et les matières colorantes sont facultativement présents en quantités variables selon le type de parfum choisi.

Dans le cas de la mise en oeuvre d'un agent acidulant ce dernier doit être en quantité telle pour régler le pH de l'entremets obtenu à une valeur supérieure à 2, de préférence supérieure à 3.

La quantité d'agent acidulant employé est fonction de sa nature. Par exemple, dans le cas de l'acide citrique, on obtiendra un pH voisin de 3,5 en metant en oeuvre de 0,7 à 1% d'acide par rapport à l'eau utilisée pour reconstituer l'entremets.

On peut donner des exemples de préparations pour entremets utilisées préférentiellement:

Preparation A
- Protéines de lactosérum
- Gomme Xanthane
- Amidon prégélatinisé
- Saccharose

Preparation B
- Protéines de lactosérum
- Gomme Xanthane
- Carraghénate et/ou alginate de sodium
- Amidon prégélatinisé
- Saccharose

Preparation C
- Protéines de lactosérum
- Gomme Xanthane
- Carraghénate et/ou alginate de sodium
- Amidon prégélatinisé

— Pyrophosphate de sodium ou de potassium
— Saccharose

Preparation D
— Protéines de lactosérum
— Gomme Xanthane
— Carraghénate et/ou alginate de sodium
— Amidon prégélatinisé
— Pyrophosphate de sodium ou de potassium
— Saccharose
— Acide citrique

Pour préparer un entremets à base de lait ou d'eau conformément à l'invention, on ajoute la préparation en poudre sus-spécifiée au liquide choisi qui peut être à température ambiante ou froid s'il sort du réfrigérateur : sa température peut donc varier sans inconvénient entre 5 et 25° C. Généralement, on mélange environ 100 g de préparation avec environ 250 $cm^3$ de lait ou d'eau. On réalise le foisonnement de l'entremets en se servant par exemple d'un fouet ou batteur à oeufs ou d'un mélangeur (ou »mixer«) électrique. L'entremets peut être consommé tel quel ou bien glacé après refroidissement jusqu'à la prise au réfrigérateur.

Lorsque le liquide mélangé à la préparation est l'eau, on emploie évidemment une eau potable qui peut être indifféremment l'eau du robinet ou une eau minérale naturelle.

Lors de la confection d'un entremets à base de lait en utilisant la préparation selon l'invention, on peut employer soit du lait entier liquide, soit du lait écrémé liquide : le lait utilisé peut être frais, pasteurisé ou stérilisé selon le principe »Haute température-Courte durée«.

On peut encore remplacer entièrement le lait, en ajoutant de la poudre de lait entier ou écrémé à la préparation en poudre dans un rapport pondéral généralement de 20 à 30%. Dans ce cas, il suffit d'ajouter de l'eau et de battre le mélange afin de l'obtenir sous forme mousseuse.

Pour permettre de mieux illustrer la mise en oeuvre de l'invention, on donne, ci-après, différents exemples et des essais comparatifs.

Dans tous les exemples, le colloïde hydrophile de Xanthomonas utilisé, est la gomme Xanthane alimentaire commercialisée par la Société RHONE-POULENC sous la dénomination commerciale RHODIGEL 23 dont les spécifications sont les suivantes:

| | |
|---|---|
| — Pureté | ≥91% |
| — Cendres | 6,5 à 16% |
| — Perte au séchage | ≤15% |
| — Acide pyruvique | ≥1,5% |
| — Arsenic | ≤3 p. p. m. |
| — Métaux lourds (en Pb) | ≤30 p. p. m. |
| — Alcool isopropylique | ≤750 p. p. m. |
| — Plomb | ≤5 p. p. m. |

Les protéines de lactosérum mises en oeuvre selon l'invention sont des protéines de lactosérum obtenues sur Sphérosil échangeurs d'ions conformément au procédé décrit dans la demande de certificat d'addition 2 392 214 (77/24 162).

Lesdites protéines sont extraites du lactosérum selon un procédé qui consiste:

— à percoller du lactosérum doux (pH 6,5) successivement sur une première colonne d'une résine échangeuse d'anions formée de silice revêtue d'un film de polymère réticulé portant des groupements $-N(CH_3)^+{}_3Cl^-$ (Sphérosil QMA) puis sur une deuxième colonne de silice ayant une granulométrie de 100 à 200 µm, une surface spécifique de 25 $m^2/g$, un diamètre poreux moyen de 1000 Å et un volume poreux de 0,8 $cm^3/g$ (Sphérosil XOB 15).
— à laver à l'eau la résine et la silice des deux colonnes
— à éluer la première colonne par une solution d'acide chlorhydrique N/100 et la deuxième colonne par une solution d'ammoniaque N/100
— enfin à laver, à nouveau, à l'eau les deux colonnes.

Les protéines de lactosérum obtenues ont les caractéristiques suivantes:

| | |
|---|---|
| — Azote | 13% (soit 90,3% de pureté protéique) |
| — Carbone | 47% |
| — Cendres | 2,5% |
| — Lactose | < 0,5% |
| — Matières grasses | < 0,5% |
| — Eau | 9% |

— Lactate < 0,1%
— Sels minéraux 1,38%

Afin de juger du pouvoir foisonnant de la composition utilisée, on réalise le test décrit ci-après.

On part d'une préparation comprenant le composition (ou base) foisonnante associée à d'autres ingrédients définis dans les essais.

On introduit 100 g de la préparation qui est, sous forme de poudre dans le bol d'un batteur ménager puis l'on ajoute 250 cm³ d'eau ou de lait.

On bat le mélange 5 minutes à l'aide d'un batteur équipé de fouets fins destinés normalement pour monter les blancs d'oeufs : la vitesse du batteur étant maximum.

On détermine la densité de la mousse obtenue et l'on juge de son aspect et de sa stabilité au vieillissement.

Dans les exemples suivants, on met en évidence les propriétés des compositions foisonnantes de l'invention. Les préparations confectionnées sont des préparations neutres, sans agent aromatisant, parfum ou matière colorante.

Exemples 1 à 4

On réalise la préparation suivante:

— Protéines de lactosérum 15%
— Gomme Xanthane 1%
— Garraghénate 1%
— Amidon de maïs prégélatinisé 12%
— Saccharose 71%

Afin de reconstituer la mousse, on ajoute à température ambiante, à 100 g de ce mélange:

— dans l'exemple 1: 250 cm³ d'eau du robinet
— dans l'exemple 2: 250 cm³ de lait entier U.H.T.
— dans l'exemple 3: 250 cm³ d'eau du robinet + 1 g d'acide citrique monohydraté.
— dans l'exemple 4: 250 cm³ de lait entier U.H.T. + 1 g d'acide citrique monohydraté.

On réalise le foisonnement de la préparation au batteur ménager comme précédemment décrit.

Les résultats sont consignés dans le tableau 1.

Tableau 1

| | Exemples | | | |
|---|---|---|---|---|
| | 1 | 2 | 3 | 4 |
| Reconstitution | Eau | Lait | Eau + acide citrique | Lait + acide citrique |
| pH | 3,9 | 4,8 | 3,2 | 4,3 |
| Densité de la mousse | 0,395 | 0,400 | 0,360 | 0,460 |
| Aspect | Bonne structure | Mousses fines et onctueuses | Bonne structure | Un peu liquide |

Exemples 5 à 10

Dans cette série d'exemples, on note l'influence du pH sur la densité et l'aspect des mousses obtenues.

On réalise la préparation suivante:

— Protéines de lactosérum 10%
— Gomme Xanthane 0,8%
— Alginate de sodium 1%
— Amidon de maïs prégélatinisé 8,2%

- Pyrophosphate tétrasodique 1%
- Saccharose 79%

Dans les exemples 5 à 10, on ajoute à 100 g de la préparation, des quantités croissantes d'acide citrique de 0 à 9 g de façon à avoir une gamme de pH allant de 5,3 à 2,6.

On effectue le test de foisonnement avec 250 $cm^3$ d'eau du robinet.

Les résultats sont consignés dans le tableau 2.

Tableau 2

| | Exemples | | | | | |
|---|---|---|---|---|---|---|
| | 5 | 6 | 7 | 8 | 9 | 10 |
| Acide citrique (g) | 0 | 0,5 | 1 | 2 | 4 | 9 |
| pH | 5,3 | 4,45 | 4,2 | 3,7 | 3,2 | 2,6 |
| Densité de la mousse | 0,360 | 0,340 | 0,350 | 0,340 | 0,360 | 0,390 |
| Aspect | ← Mousses fines et fermes → | | | Légèrement moins fermes | | |

On constate que la variation de la densité des mousses est faible dans cette gamme de pH acides.

Exemple 11

On met en évidence la stabilité de la préparation suivante au cours d'un stockage prolongé.

- Protéines de lactosérum 10%
- Gomme Xanthane 0,8%
- Alginate de sodium 1%
- Amidon de maïs prégélatinisé 8,2%
- Pyrophosphate tétrasodique 1%
- Saccharose 79%

On conserve la préparation à la température ambiante de 22°C et l'on effectue le test de foisonnement sur 100 g de préparation mélangés avec 250 $cm^3$ d'eau du robinet et 1 g d'acide citrique monohydraté.

Les résultats sont consignés dans le tableau 3.

Tableau 3

| | Age de la préparation | | | |
|---|---|---|---|---|
| | Fabrication | 2 mois | 6 mois | 1 an |
| pH | 4,2 | 4,2 | 4,25 | 4,2 |
| Densité de la mousses | 0,350 | 0,340 | 0,345 | 0,350 |
| Aspect | ← Mousses fines et fermes → | | | |

On note peu d'évolution de la préparation au cours du stockage.

On effecture ensuite une série d'essais comparatifs montrant la supériorité de la composition foisonnante de l'invention par rapport à une base foisonnante composée d'un émulsifiant, de matière grasse et de caséinate de sodium.

Essais A à F

Dans ces essais, on met en oeuvre une base foisonnante constituée de 10% d'esters lactiques de mono- et diglycérides, 50% d'huile de coprah hydrogénée (point de fusion: 30° C) et 40% de caséinate de sodium.

On réalise la préparation suivante:

| | |
|---|---|
| — Base foisonnante | 33% |
| — Alginate de sodium | 0,75% |
| — Carraghénate | 0,75% |
| — Saccharose | 65,5% |

A 92 g de ce mélange de poudres, on ajoute 250 $cm^3$ de lait entier U.H.T. froid à 5—6° C et des quantités croissantes d'acide citrique monohydraté : le test de foisonnement est conduit dans les conditions décrites précédemment.

Les résultats sont consignés dans le tableau 4.

Tableau 4

| | Essais | | | | | |
|---|---|---|---|---|---|---|
| | A | B | C | D | E | F |
| Acide citrique (g) | 0 | 0,2 | 0,3 | 0,4 | 0,5 | 1 |
| pH | 6,7 | 6,05 | 5,9 | 5,6 | 5,5 | 4,5 |
| Densité de la mousse | 0,340 | 0,335 | 0,380 | 0,750 | 0,880 | 0,9 |
| Aspect | Mousses fermes | | Structure plus grossière | ← Liquide → | | |

On remarque une baisse importante du pouvoir foisonnant de la base à pH même légèrement acide.

Essais G à K

On réalise une série d'essais dans les mêmes conditions que la série d'essais A à F mais en remplaçant le lait par de l'eau du robinet.

Les résultats sont consignés dans le tableau 5.

Tableau 5

| | Essais | | | | |
|---|---|---|---|---|---|
| | G | H | I | J | K |
| Acide citrique (g) | 0 | 0,05 | 0,1 | 0,15 | 0,2 |
| pH | 7,4 | 6,5 | 6,1 | 5,35 | 5,2 |
| Densité de la mousse | 0,320 | 0,370 | 0,385 | 0,630 | 0,875 |
| Aspect | Mousses fermes | Manque de fermeté | Assez liquide | ← Liquide → | |

En examinant les résultats consignés dans les tableaux 2 et 5, on note les propriétés supérieures de la compositions foisonnante de l'invention car la base foisonnante à pH acide a un mauvais pouvoir

foisonnant et il y a une importante variation de la densité des mousses dans une gamme de pH acides, pH pourtant moins acides que dans les exemples 5 à 10.

Essai L

Dans cet essai, on étudie la stabilité au stockage de la préparation mise en oeuvre dans les essais précédents A à K.

On conserve la préparation à la température ambiante de 22°C et l'on effectue le test de foisonnement avec 250 $cm^3$ de lait demi-écrémé U.H.T.

Les résultats sont consignés dans le tableau 6.

Tableau 6

| | Age de la base | | | | |
|---|---|---|---|---|---|
| | Réception | 1 mois | 6 mois | 1 an | 2 ans |
| Densité de la mousse | 0,320 | 0,340 | 0,380 | 0,440 | 0,490 |
| Aspect | ⟵ Mousses fermes ⟶ | | Mousses assez fermes | Légèrement liquide | |

On note une baisse du pouvoir foisonnant de la base en fonction du temps. Cette diminution du pouvoir foisonnant pourrait être dûe à une modification de structure ou une oxydation de la phase grasse constituée par l'émulsifiant et la matière grasse.

On réalise ensuite 3 séries d'essais en faisant varier la nature de la protéine.

Exemples 12 à 15
Essais M à T

On compare trois protéines du lait obtenues par des techniques différentes:

a) protéines de lactosérum obtenues sur Sphérosil échangeurs d'ions dont les caractéristiques ont été données ci-dessus.
b) protéines de lactosérum extraites par un procédé d'ultrafiltation dont la composition est la suivante:

- Protéines 60%
- Lactose 30%
- Matières grasses 3%
- Sels minéraux 7%

c) caséinate de sodium.
On réalise la préparation suivante:

- Protéines (a, b ou c) 9%
- Gomme Xanthane 0,7%
- Carraghénate 0,7%
- Amidon de maïs prégélatinisé 10%
- Pyrophosphate tétrasodique 0,6%
- Saccharose 79%

Les tests de foisonnement sont réalisés, comme précédemment sur 100 g de préparation.

Afin de reconstituer la mousse, on ajoute à température ambiante:

- dans l'exemple 12 et les essais M et Q:
  250 $cm^3$ de lait demi-écrémé U.H.T.
- dans l'exemple 13 et les assais N et R:
  250 $cm^3$ d'eau du robinet.
- dans l'exemple 14 et les essais 0 et S 250 $cm^3$ d'eau du robinet + 1 g d'acide citrique monohydraté.
- dans l'exemple 15 et les essais P et T:
  250 $cm^3$ d'eau du robinet + 2 g d'acide citrique monohydraté.

Les résultats sont consignés dans le tableau 7.

Tableau 7

a) Protéines de lactosérum

| | Exemples | | | |
|---|---|---|---|---|
| | 12 | 13 | 14 | 15 |
| Reconstitution | Lait | Eau | Eau + acide citrique (1 g) | Eau + acide citrique (2 g) |
| pH | 5,3 | 5,1 | 3,9 | 3,5 |
| Densité de la mousse | 0,320 | 0,355 | 0,310 | 0,320 |
| Aspect | Mousses fines et onctueuses | Mousses fines et fermes | ← Mousses fines → | |

b) Protéines de lactosérum ultrafiltrées

| | Essais | | | |
|---|---|---|---|---|
| | M | N | O | P |
| Reconstitution | Lait | Eau | Eau + acide citrique (1 g) | Eau + acide citrique (2 g) |
| pH | 6,8 | 7,6 | 5,1 | 4,2 |
| Densité de la mousse | 0,490 | 0,860 | 0,615 | 0,810 |
| Aspect | ← Liquide → | | | Mousses grossières et instables |

c) Caséinate de sodium

| | Essais | | | |
|---|---|---|---|---|
| | Q | R | S | T |
| Reconstitution | Lait | Eau | Eau + acide citrique (1 g) | Eau + acide citrique (2 g) |
| pH | 7 | 7,9 | 5,5 | 4,5 |
| Densité de la mousse | 0,390 | 0,295 | 0,550 | 0,980 |
| Aspect | Mousses fines, onctueuses un peu filantes | Mousses fines et fermes | ← Liquide → | |

On note que la nature et la pureté des protéines de lactosérum sont importantes.

**Revendications pour les Etats contractants: BE, CH, DE, FR, GB, IT, LI, LU, NL, SE**

1. Nouvelle composition alimentaire foisonnante caractérisée par le fait qu'elle comprend au moins:

— des protéines de lactosérum extraites selon un procédé qui consiste à mettre en contact le

lactosérum avec successivement au moins une résine échangeuse d'anions puis de la silice ou avec successivement de la silice puis au moins une résine échangeuse d'anions, fixation de protéines et élution, et

— un colloïde hydrophile de Xanthomonas.

2. Nouvelle composition selon la revendication 1, caractérisée par le fait que le colloïde hydrophile de Xanthomonas est la gomme Xanthane.

3. Nouvelle composition selon l'une des revendications 1 ou 2, caractérisée par le fait que le rapport pondéral des protéines de lactosérum et du colloïde hydrophile de Xanthomonas varie de 5à 15%.

4. Procédé de préparation d'entremets foisonnants du type instantané, caractérisé par le fait que l'on mélange du lait ou de l'eau à une préparation en poudre comprenant au moins la composition foisonnante selon l'une des revendications 1 à 3, un autre colloïde, un amidon non modifié chimiquement, un phosphate alimentaire.

5. Procédé selon la revendication 4, caractérisé par le fait que la préparation comprend un agent édulcorant.

6. Procédé selon l'une des revendications 4 et 5, caractérisé par le fait que la préparation comprend un agent acidulant.

7. Procédé selon l'une des revendications 4 à 6, caractérisé par le fait que la préparation comprend un agent aromatisant.

8. Procédé selon l'une des revendications 4 à 7, caractérisé par le fait que l'autre colloïde associé au colloïde hydrophile de Xanthomonas est un alginate de sodium, un carraghénate ou un mélange des deux.

9. Procédé selon l'une des revendications 4 à 8, caractérisé par le fait que l'amidon non modifié chimiquement est un amidon prégélatinisé.

10. Procédé selon l'une des revendications 4 à 9, caractérisé par le fait que le phosphate alimentaire est un pyrophosphate tétrasodique ou tétrapotassique.

11. Procédé selon l'une des revendications 4 à 10, caractérisé par le fait que l'agent édulcorant est le saccharose.

12. Procédé selon l'une des revendications 4 à 11, caractérisé par le fait que l'agent acidulant est l'acide citrique.

13. Procédé selon l'une des revendications 4 à 12, caractérisé par le fait que l'agent aromatisant est un agent tel que le cacao, vanille, cannelle ou un extrait de fruits.

14. Procédé selon l'une des revendications 4 à 13, caractérisé par le fait que la préparation comprend de 5 à 20% de protéines de lactosérum; de 0,5 à 1,5% d'un colloïde hydrophile de Xanthomonas; de 0,5 à 1,5% d'un autre colloïde; de 5 à 20% d'un amidon non modifié chimiquement, de 0,5 à 1,5% d'un phosphate alimentaire.

15. Procédé selon la revendication 14, caractérisé par le fait que la preparation comprend de 50 à 90% d'un agent édulcorant.

16. Prodcédé selon l'une des revendications 4 à 15, caractérisé par le fait que la préparation se trouve sous forme pulvérulente.

17. Procédé selon l'une des revendications 4 à 16, caractérisé par le fait que la préparation comprend en outre de la poudre de lait entier ou écrémé.

18. Procédé l'une des revendications 4 à 17 caractérisé par le fait que l'entrements obtenu peut être glacé.

**Revendications four l'Etat contractant: AT**

1. Emploi pour préparer des entremets foisonnants d'une composition foisonnante comprenant au moins:

— des protéines de lactosérum extraites selon un procédé qui consiste à mettre en contact le lactosérum avec successivement au moins une résine échangeuse d'anions puis de la silice ou avec successivement de la silice puis au moins une résine échangeuse d'anions, fixation de protéines et élution, et
— un colloïde hydrophile de Xanthomonas.

2. Emploi selon la revendication 1, caractérisé par le fait que le colloïde hydrophile de Xanthomonas est la gomme Xanthane.

3. Emploi selon l'une des revendications 1 ou 2, caractérisé par le fait que le rapport pondéral des protéines de lactosérum et du colloïde hydrophile de Xanthomonas varie de 5 à 15%.

4. Procédé de préparation d'entremets foisonnants du type instantané, caractérisé par le fait que l'on mélange du lait ou de l'eau à une préparation en poudre comprenant au moins la composition foisonnante selon l'une des revendications 1 à 3, un autre colloïde, un amidon non modifié chimiquement, un phosphate alimentaire.

5. Procédé selon la revendication 4, caractérisé par le fait que la préparation comprend un agent édulcorant.

6. Procédé selon l'une des revendications 4 et 5, caractérisé par le fait que la préparation comprend un agent acidulant.

7. Procédé selon l'une des revendications 4 à 6, caractérisé par le fait que la préparation comprend un agent aromatisant.

8. Procédé selon l'une des revendications 4 à 7, caractérisé par le fait que l'autre colloïde associé au colloïde hydrophile de Xanthomonas est un alginate de sodium, un carraghénate ou un mélange des deux.

9. Procédé selon l'une des revendications 4 à 8, caractérisé par le fait que l'amidon non modifié chimiquement est un amidon prégélatinisé.

10. Procédé selon l'une des revendications 4 à 9, caractérisé par le fait que le phosphate alimentaire est un pyrophosphate tétrasodique ou tétrapotassique.

11. Procédé selon l'une des revendications 4 à 10, caractérisé par le fait que l'agent édulcorant est le saccharose.

12. Procédé selon l'une des revendications 4 à 11, caractérisé par le fait que l'agent acidulant est l'acide citrique.

13. Procédé selon l'une des revendications 4 à 12, caractérisé par le fait que l'agent aromatisant est un agent tel que le cacao, vanille, cannelle ou un extrait de fruits.

14. Procédé selon l'une des revendications 4 à 13, caractérisé par le fait que la préparation comprend de 5 à 20% de protéines de lactosérum; de 0,5 à 1,5% d'un colloïde hydrophile de Xanthomonas; de 0,5 à 1,5% d'un autre colloïde; de à 20% d'un amidon non modifié chimiquement, de 0,5 à 1,5% d'un phosphate alimentaire.

15. Procédé selon la revendication 14, caractérisé par le fait que la préparation comprend de 50 à 90% d'un agent édulcorant.

16. Procédé selon l'une des revendications 4 à 15, caractérisé par le fait que la préparation se trouve sous forme pulvérulente.

17. Procédé selon l'une des revendications 4 à 16, caractérisé pat le fait que la préparation comprend en outre de la poudre de lait entier ou écrémé.

18. Procédé l'une des revendications 4 à 17 caractérisé par le fait que l'entrements obtenu peut être glacé.

**Patentansprüche für die Vertragsstaaten: BE, CH, DE, FR, GB, IT, LI, LU, NL, SE**

1. Neue aufquellende Lebensmittelzusammensetzung, dadurch gekennzeichnet, daß sie wenigstens enthält:

— Proteine des Lactoserums, die nach einem Verfahren extrahiert sind, bei dem man das Lactoserum nacheinander mit wenigstens einem Anionenaustauscherharz und dann mit Kieselsäure oder nacheinander mit Kieselsäure und dann mit wenigstens einem Anionenaustauscherharz in Berührung bringt, die Proteine fixiert und eluiert, und
— ein hydrophiles Xanthomonas-Kolloid.

2. Neue Zusammensetzung nach Anspruch 1, dadurch gekennzeichnet, daß das hydrophile Xanthomonas-Kolloid Xanthan-Gummi ist.

3. Neue Zusammensetzung nach einem der Ansprüche 1 oder 2, dadurch gekennzeichnet, daß das Gewichtsverhältnis der Lactoserum-Proteine und des hydrophilen Xanthomonas-Kolloids 5 bis 15% beträgt.

4. Verfahren zur Herstellung von sofort aufquellenden Süßspeisen, dadurch gekennzeichnet, saß man Milch oder Wasser mit einer pulverförmigen Zubereitung vermischt, die wenigstens die aufquellende Zusammensetzung nach einem der Ansprüche 1 bis 3, ein anderes Kolloid, eine chemisch nicht modifizierte Stärke und ein Lebensmittelprodukt enthält.

5. Verfahren nach Anspruch 4, dadurch gekennzeichnet, daß die Zubereitung einen Süßstoff enthält.

6. Verfahren nach einem der Ansprüche 4 und 5, dadurch gekennzeichnet, daß die Zubereitung ein ansäuerndes Mittel enthält.

7. Verfahren nach einem der Ansprüche 4 bis 6, dadurch gekennzeichnet, daß die Zubereitung ein aromatisierendes Mittel enthält.

8. Verfahren nach einem der Ansprüche 4 bis 7, dadurch gekennzeichnet, daß das andere, mit dem hydrophilen Xanthomonas-Kolloid verwendete Kolloid ein Natriumalginat, ein Carrageenat oder ein Gemisch von beiden ist.

9. Verfahren nach einem der Ansprüche 4 bis 8, dadurch gekennzeichnet, daß die chemisch nicht modifizierte Stärke eine vorgelatinierte Stärke ist.

10. Verfahren nach einem der Ansprüche 4 bis 9, dadurch gekennzeichnet, daß das Lebensmittelphosphat Tetranatrium- oder Tetrakalium-pyrophosphat ist.

11. Verfahren nach einem der Ansprüche 4 bis 10, dadurch gekennzeichnet, daß das süßende Mittel Saccharose ist.

12. Verfahren nach einem der Ansprüche 4 bis 11, dadurch gekennzeichnet, daß das ansäuernde Mittel Zotronensäure ist.

13. Verfahren nach einem der Ansprüche 4 bis 12, dadurch gekennzeichnet, daß das aromatisierende Mittel eine Substanz wie Kakao, Vanille, Zimt oder ein Fruchtextrakt ist.

14. Verfahren nach einem der Ansprüche 4 bis 13, dadurch gekennzeichnet, daß die Zubereitung 5 bis 20% der Lactoserum-Proteine, 0,5 bis 1,5% eines hydrophilen Xanthomonaskolloids 0,5 bis 1,5% eines anderen Kolloids, 5 bis 20% einer chemisch nicht modifizierten Stärke und 0,5 bis 1,5% eines Lebensmittelphosphats enthält.

15. Verfahren nach Anspruch 13, dadurch gekennzeichnet, daß die Zubereitung 50 bis 90% eines süßenden Mittels enthält.

16. Verfahren nach einem der Ansprüche 4 bis 15, dadurch gekennzeichnet, daß die Zubereitung in Form eines Pulvers vorliegt.

17. Verfahren nach einem der Ansprüche 14 bis 16, dadurch gekennzeichnet, daß die Zubereitung zusätzlich ein Vollmilch- oder Magermilchpulver enthält.

18. Verfahren nach einem der Ansprüche 4 bis 17, dadurch gekennzeichnet, daß die erhaltene Süßspeise gefroren werden kann.

**Patentansprüche für den Vertragsstaat: AT**

1. Verwendung einer aufquellenden Zusammensetzung, die wenigstens enthält:

- Proteine des Latoserums, die nach einem Verfahren extrahiert sind, bei dem man das Lactoserum nacheinander mit wenigstens einem Anionenaustauscherharz und dann mit Kieselsäure oder nacheinander mit Kieselsäure und dann mit wenigstens einem Anionenaustauscherharz in Berührung bringt, die Proteine fixiert und eluiert, und
- ein hydrophiles Xanthomonas-Kolloid

zur Herstellung von aufquellenden Süßspeisen.

2. Verwendung nach Anspruch 1, dadurch gekennzeichnet, daß das hydrophile Xanthomonas-Kolloid Xanthan-Gummi ist.

3. Verwendung nach einem der Ansprüche 1 oder 2, dadurch gekennzeichnet, daß das Gewichtsverhältnis der Lactoserum-Proteine und des hydrophilen Xanthomonas-Kolloids 5 bis 15% beträgt.

4. Verfahren zur Herstellung von sofort aufquellenden Süßspeisen, dadurch gekennzeichnet, daß man Milch oder Wasser mit einer pulverförmigen Zubereitung vermischt, die wenigstens die aufquellende Zusammensetzung nach einem der Ansprüche 1 bis 3, ein anderes Kolloid, eine chemisch nicht modifizierte Stärke und ein Lebensmittelphosphat enthält.

5. Verfahren nach Anspruch 4, dadurch gekennzeichnet, daß die Zubereitung einen Süßstoff enthält.

6. Verfahren nach einem der Ansprüche 4 und 5, dadurch gekennzeichnet, daß die Zubereitung ein ansäuerndes Mittel enthält.

7. Verfahren nach einem der Ansprüche 4 bis 6, dadurch gekennzeichnet, daß die Zubereitung ein aromatisierendes Mittel enthält.

8. Verfahren nach einem der Ansprüche 4 bis 7, dadurch gekennzeichnet, daß das andere, mit dem hydrophilen Xanthomonas-Kolloid verwendete Kolloid ein Natriumalginat, ein Carrageenat oder ein Gemisch von beiden ist.

9. Verfahren nach einem der Ansprüche 4 bis 8, dadurch gekennzeichnet, daß die chemisch nicht modifizierte Stärke eine vorgelatinierte Stärke ist.

10. Verfahren nach einem der Ansprüche 4 bis 9, dadurch gekennzeichnet, daß das Lebensmittelphosphat Tetranatrium- oder Tetrakalium-pyrosphosphat ist.

11. Verfahren nach einem der Ansprüche 4 bis 10, dadurch gekennzeichnet, daß das süßende Mittel Saccharose ist.

12. Verfahren nach einem der Ansprüche 4 bis 11, dadurch gekennzeichnet, daß das ansäuerende Mittel Zitronensäure ist.

13. Verfahren nach einem der Ansprüche 4 bis 12, dadurch gekennzeichnet, daß das aromatisierende Mittel eine Substanz wie Kakao, Vanille, Zimt oder ein Fruchtextrakt ist.

14. Verfahren nach einem der Ansprüche 4 bis 13, dadurch gekennzeichnet, daß die Zubereitung 5 bis 20% der Lactoserum-Proteine, 0,5 bis 1,5% eines hydrophilen Xanthomonaskolloids, 0,5 bis 1,5% eines anderen Kolloids, 5 bis 20% einer chemisch nicht modifizierten Stärke und 0,5 bis 1,5% eines Lebensmittelphosphats enthält.

15. Verfahren nach Anspruch 13, dadurch gekennzeichnet, daß die Zubereitung 50 bis 90% eines süßenden Mittels enthält.

16. Verfahren nach einem der Ansprüche 4 bis 15, dadurch gekennzeichnet, daß die Zubereitung in

Form eines Pulvers vorliegt.

17. Verfahren nach einem der Ansprüche 14 bis 16, dadurch gekennzeichnet, daß die Zubereitung zusätzlich ein Vollmilch- oder Magermilchpulver enthält.

18. Verfahren nach einem der Ansprüche 4 bis 17, dadurch gekennzeichnet, daß die erhaltene Süßspeise gefroren werden kann.

**Claims for the contracting State: AT**

1. Use for preparing swelling entrements dishes of a swelling composition comprising at least:

— lactoserum proteins extracted in accordance with a process which comprises bringing the lactoserum into contact with in succession at least one anion exchange resin and then silica or with in succession silica and then at least one anion exchange resin, protein fixing and elution, and
— a hydrophilic Xanthomonas colloid.

2. Use according to claim 1 characterised in that the hydrophilic Xanthomonas colloid is Xanthane gum.

3. Use according to claim 1 or claim 2 characterised in that the ratio by weight of the lactoserum proteins and the hydrophilic Xanthomonas colloid varies from 5 to 15%.

4. A process for preparing swelling entremets dishes of the instant type, characterised in that milk or water is mixed with a preparation in powder form comprising at least the swelling composition according to one of claims 1 to 3, another colloid, a chemically unmodified starch and an alimentary phosphate.

5. A process according to claim 4 characterised in that the preparation comprises a sweetener.

6. A process according to one of claims 4 and 5 characterised in that the preparation comprises an acidulating agent.

7. A process according to one of claims 4 to 6 characterised in that the preparation comprises an aromatising agent.

8. A process according to one of claims 4 to 7 characterised in that the other colloid associated with the hydrophilic Xanthomonas colloid is a sodium alginate, a carrageenin or a mixture of those two.

9. A process according to one of claims 4 to 8 characterised in that the chemically unmodified starch is a pregelatinised starch.

10. A process according to one of claims 4 to 9 characterised in that the alimentary phosphate is a tetrasodium or tetrapotassium pyrophosphate.

11. A process according to one of claims 4 to 10 characterised in that the sweetener is saccharose.

12. A process according to one of claims 4 to 11 characterised in that the acidulating agent is citric acid.

13. A process according to one of claims 4 to 12 characterised in that the aromatising agent is an agent such as cocoa, vanilla, cinnamon or a fruit extract.

14. A process according to one of claims 4 to 13 characterised in that the preparation comprises from 5 to 20% of lactoserum proteins; from 0.5 to 1.5% of a hydrophilic Xanthomonas colloid; from 0.5 to 1.5% of another colloid; from 5 to 20% of a chemically unmodified starch, and from 0.5 to 1.5% of an alimentary phosphate.

15. A process according to claim 14 characterised in that the preparation comprises from 50 to 90% of a sweetener.

16. A process according to one of claims 4 to 15 characterised in that the preparation is in powder form.

17. A process according to one of claims 4 to 16 characterised in that the preparation further comprises whole milk or skimmed milk powder.

18. A process according to one of claims 4 to 17 characterised in that the entrements dishes produces may be frozen.

**Claims for the Contracting States: BE, CH, DE, FR, GB, IT, LI, LU, NL, SE**

1. A novel swelling alimentary composition characterised in that it comprises at least:

— lactoserum proteins extracted in accordance with a process which comprises bringing the lactoserum into contact with in succession at least one anion exchange resin and then silica or with in succession silica and then at least one anion exchange resin, protein fixing and elution, and
— a hydrophilic Xanthomonas colloid.

2. A novel composition according to claim 1 characterised in that the hydrophilic Xanthomonas colloid is Xanthane gum.

3. A novel composition according to claim 1 or claim 2 characterised in that the ratio by weight of the lactoserum proteins and the hydrophilic Xanthomonas colloid varies from 5 to 15%.

4. A process for preparing swelling entremets dishes of the instant type, characterised in that milk or water is mixed with a preparation in powder form comprising at least the swelling composition according to one of claims 1 to 3, another colloid, a chemically unmodified starch and an alimentary phosphate.

5. A process according to claim 4 characterised in that the preparation comprises a sweetener.

6. A process according to one of claims 4 and 5 characterised in that the preparation comprises an acidulating agent.

7. A process according to one of claims 4 to 6 characterised in that the preparation comprises an aromatising agent.

8. A process according to one of claims 4 to 7 characterised in that the other colloid associated with the hydrophilic Xanthomonas colloid is a sodium alginate, a carrageenin or a mixture of those two.

9. A process according to one of claim 4 to 8 characterised in that the chemically unmodified starch is a pregelatinised starch.

10. A process according to one of claims 4 to 9 characterised in that the alimentary phosphate is a tetrasodium or tetrapotassium pyrophosphate.

11. A process according to one of claims 4 to 10 characterised in that the sweetener is saccharose.

12. A process according to one of claims 4 to 11 characterised in that the acidulating agent is citric acid.

13. A process according to one of claims 4 to 12 characterised in that the aromatising agent is an agent such as cocoa, vanilla, cinnamon or a fruit extract.

14. A process according to one of claims 4 to 13 characterised in that the preparation comprises from 5 to 20% of lactoserum proteins; from 0.5 to 1.5% of a hydrophilic Xanthomonas colloid; from 0.5 to 1.5% of another colloid; from 5 to 20% of a chemically unmodified starch, and from 0.5 to 1.5% of an alimentary phosphate.

15. A process according to claim 14 characterised in that the preparation comprises from 50 to 90% of a sweetener.

16. A process according to one of claims 4 to 15 characterised in that the preparation is in powder form.

17. A process according to one of claims 4 to 16 characterised in that the preparation further comprises whole milk or skimmed milk powder.

18. A process according to one of claims 4 to 17 characterised in that the entrements dishes produced may be frozen.